# EUROPÄISCHE PATENTANMELDUNG

(11) **EP 0 999 468 A1**
(43) Veröffentlichungstag der Anmeldung: **10.05.2000**
(21) Anmeldenummer: 99121734.0
(22) Anmeldetag: 03.11.1999
(51) Int. Cl.: G03B 19/12

(54) **Spiegelreflexkamera**

(30) Priorität: 05.11.1998 DE 19850894
(71) Anmelder: Rollei Fototechnic GmbH, 38126 Braunschweig (DE)
(72) Erfinder: Scholz, Erwin, 38304 Wolfenbüttel (DE); Tiedemann, Jörg, 38112 Braunschweig (DE)
(74) Vertreter: Gramm, Werner, Prof. Dipl.-Ing.

(57) **Zusammenfassung**

Die Erfindung betrifft eine Spiegelreflexkamera mit einem einen Sucherspiegel (1), einen Spiegelträger (2), der zwischen zwei Endstellungen, einer Sucherstellung und einer Aufnahmestellung, verstellbar ist.

Um eine sichere Verstellung in die Endstellung zu erreichen, ist vorgesehen, daß
- mit dem Spiegelträger (2) Rastmittel (5, 105) zum Einrasten in den Endstellungen und einer Aufnahmeeinrichtung (9) vorgesehen sind, und
- verstellbare Eingriffsmittel (7, 107) vorgesehen sind, die in einer Eingriffsstellung in die Rastmittel (5, 105) eingreifen und in einer Lösestellung die Rastmittel freigeben.

Vorteilhafterweise ist ein Mitnehmer (8) vorgesehen, der von einem Antrieb entlang einer Mitnehmerbahn verstellbar ist und in der Aufnahmeeinrichtung (9) entlang seiner Mitnehmerbahn innerhalb einer Wegstrecke bewegbar ist, die durch zwei Anlagepositionen in der Aufnahmeeinrichtung (9, 10) begrenzt ist, wobei der Spiegelträger (2) über die Aufnahmeeinrichtung (9) durch den Mitnehmer (8) in diesen Anlagepositionen verstellbar ist, wobei die Eingriffsmittel, die insbesondere verschwenkbare Rasthebel (7, 107) sein können, durch den Mitnehmer (8) aus der Eingriffsstellung in die Lösestellung verstellbar sind.

## Beschreibung

Die Erfindung betrifft eine Spiegelreflexkamera mit einem einen Sucherspiegel tragenden Spiegelträger, der zwischen zwei Endstellungen, einer Sucherstellung und einer Aufnahmestellung, verstellbar ist.

Eine derartige Spiegelreflexkamera ist beispielsweise aus der DE 44 47 092 A1 bekannt. Dabei ist üblicherweise der Sucherspiegel in der Sucherstellung innerhalb eines Strahlengangs und in der Aufnahmestellung außerhalb eines Strahlengangs angeordnet. Hierfür ist eine entsprechende Verstellbewegung des Sucherspiegels bzw. des den Sucherspiegel tragenden Spiegelträgers erforderlich, die beim Auslösen einer Bedienertaste der Spiegelreflexkamera hinreichend schnell vorgenommen werden und dennoch eine sichere Verstellung in die beiden Endstellungen gewährleisten muß. Hierbei ist insbesondere eine genaue Positionierung in den beiden Endstellungen erforderlich, so daß der Strahlengang nicht durch eine Dejustierung des Spiegels in einer der Stellungen ungewollt beeinflußt wird. Bei einem elektromagnetischen Antrieb, wie er in der DE 44 47 092 A1 gezeigt ist, ist zudem im allgemeinen in den Endstellungen bzw. einer der beiden Endstellungen ein entsprechender Ruhestrom notwendig, um den Sucherspiegel in der bzw. den Endstellung(en) zu halten.

Die JP 01-134443 A offenbart eine Spiegelreflexkamera, mit einem einen Sucherspiegel tragenden Spiegelträger, der zwischen zwei Endstellungen, einer Sucherstellung und einer Aufnahmestellung, verstellbar ist und in seinen beiden Endstellungen hinter mechanischen Rastmitteln einrastet. Verstellbare Eingriffsmittel in Form von verschwenkbaren Haken greifen in die Rastmittel ein und geben in einer Lösestellung die Rastmittel frei. Der Spiegelträger weist zumindest einen Teil der Rastmittel auf und ist über Antriebsmittel beaufschlagbar.

Der Erfindung liegt die Aufgabe zugrunde, einen weiteren Lösungsvorschlag für eine sichere Positionierung des Sucherspiegels in seinen Endstellungen zur Verfügung zu stellen.

Diese Aufgabe wird erfindungsgemäß gelöst durch eine Spiegelreflexkamera mit den Merkmalen des Anspruchs 1.

Die Verstellbewegung des Spiegelträgers erfolgt somit über einen von einem Antrieb angetriebenen Mitnehmer, der neben der Verstellbewegung des Spiegelträgers auch das Loslösen der Eingriffsmittel von den Rastmitteln bewirkt. Somit kann die Verstellbewegung des Spiegelträgers und der Lösevorgang, bei dem der Spiegelträger aus den eingerasteten Endstellungen gelöst wird, durch eine einheitliche Bewegung des Mitnehmers erfolgen.

Somit sind zum Loslösen und Bewegen des Spiegelträgers nicht zwei nacheinander durchzuführende Vorgänge erforderlich, die zum einen eine genaue Abstimmung der nacheinander durchzuführenden Vorgänge erforderlich machen, was im allgemeinen zu einem zeitlichen Verzug der Verstellbewegung des Spiegelträgers führt, da nach Loslösen erst ein entsprechender Verstellmechanismus aktiviert werden muß, und wird zum anderen eine hinreichende Sicherheit gewährleistet, da der Spiegelträger nicht bereits vor Loslösen des Einrastvorgangs bewegt wird.

Weiterhin ist die Verwendung von drei Baugruppen, dem Spiegelträger mit Aufnahmeeinrichtung und Rastmitteln, den Eingriffsmitteln, wie zum Beispiel Rasthebeln, und dem Mitnehmer eine hohe Sicherheit gegen ein unbeabsichtigtes Lösen des Spiegelträgers aus einer Endstellung gewährleistet, die zum Beispiel zu einem unbeabsichtigten Belichten des Films führen kann. Da der Mitnehmer in der Aufnahmeeinrichtung mit einer Wegstrecke, insbesondere einem freien Spiel angeordnet ist, führen auch starke Erschütterungen nicht sofort zu einem Loslösen der Eingriffsmittel.

Vorteilhafterweise sind die Eingriffsmittel als Rasthebel schwenkbar angeordnet und werden entsprechend in die Eingriffsstellung und Lösestellung vom Mitnehmer geschwenkt. Indem Federn vorgesehen werden, die die Rasthaken in die Eingriffsstellung rücken, wird ein sicheres Festhalten des Spiegelträgers in den Endstellungen erreicht, wobei in diesem Fall auch bei der Einfahrbewegung des Spiegelträgers in eine Endstellung zunächst ein Eingriffsmittel im allgemeinen von der Eingriffsstellung in eine Lösestellung bewegt werden muß, bevor das Eingriffsmittel wiederum von der Lösestellung in die Einraststellung einrastet. Der Lösevorgang von der Raststellung in die Lösestellung kann zum Beispiel erreicht werden, indem der Mitnehmer innerhalb der Aufnahmeeinrichtung bei der Ausfahrbewegung zunächst gegen eine Auslaufschräge des Einrastmittels drückt und somit das Einrastmittel von der Einraststellung in die Lösestellung bewegt, so daß er anschließend über die Aufnahmeeinrichtung den Spiegelträger in die andere Endstellung bewegen kann, wo wiederum ein Einrastvorgang ausgelöst wird.

Beim Einrasten kann das betreffende Einrastmittel zunächst von einer Eingriffsstellung in eine Lösestellung befördert werden, um den Spiegelträger mitsamt Aufnahmeeinrichtung und Rastmitteln aufzunehmen. Hierbei kann die Bewegung des Einrastmittels von der Raststellung in die Lösestellung zum einen durch den Mitnehmer bewirkt werden, der gegen eine Einlaufschräge des Einrastmittels drückt und damit das Einrastmittel wegbewegt, oder durch die Rastmittel, die gegen eine Schräge einer mit dem Einrastmittel verbundenen Nase drücken, die wiederum mit dem Einrastmittel verbunden ist.

Der unbeschriebene Rastmechanismus kann sowohl für eine lineare Verschiebung eines Spiegelträgers zwischen den Endstellungen als auch für eine Schwenk- bzw. Klappbewegung des Sucherspiegels zwischen den Endstellungen verwendet werden.

Die Erfindung wird im folgenden anhand der beiliegenden Zeichnungen anhand einigen Ausführungsformen näher erläutert. Es zeigen:
- Figur 1 -: eine Vorderansicht einer Anordnung aus einer Spiegelreflexkamera gemäß einer ersten Ausführungsform der Erfindung;
- Figur 2 -: eine Unteransicht der Anordnung aus Figur 1;

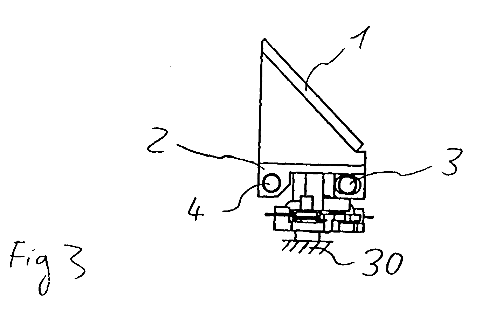

- Figur 3 -: eine Seitenansicht der Anordnung aus Figur 1 und 2.

Ein Sucherspiegel 1 ist an einem Spiegelträger 2 vorzugsweise starr befestigt. Der Spiegelträger 2 ist auf zueinander parallel in einer linearen Richtung lautenden Schienen 3 und 4 gleitend angeordnet, wobei er die Schienen hierbei vorteilhafterweise ganz oder teilweise umgreift. Am Spiegelträger 2 sind Rasthaken 5 und 105 vorgesehen, die in der linearen Richtung zueinander versetzt angeordnet sind. Eine Aufnahmeplatte 9 ist mit dem Spiegelträger 2 verbunden. Sie weist in ihrer Mitte ein sich in der linearen Richtung erstreckendes Langloch 10 auf.

An einem Kameragehäuse 30 sind Lagerzapfen 17 und 117 starr befestigt, die in Lageraugen 16, 116 von Rasthebeln 7, 107 eingreifen. Die Rasthebel 7, 107 sind um die Lagerzapfen 17, 117, vorzugsweise in einer gemeinsamen Ebene, schwenkbar, die parallel zu der durch die Führungsschienen 3, 4 definierten Ebene verläuft. Die Rasthebel 7, 107 weisen jeweils in einem mittleren Bereich Nasen 11, 111 auf, die auf einer Seite Rastkanten 22, 122 und auf einer anderen Seite Schrägen 12, 112 aufweisen. Die Rasthebelenden 13, 113 sind vorteilhafterweise gekröpft angeordnet und weisen jeweils Auslaufschrägen 14, 114 und Einlaufschrägen 24, 124 auf, die in der gezeigten Stellung des Rasthebels, die einer Einraststellung entspricht, schräg zu der genannten linearen Richtung, vorteilhafterweise unter einem Winkel von jeweils 45° zu der linearen Richtung verlaufen. Neben den Nasen 11, 111 sind Hebelanschläge 19, 119 angeordnet, die in den gezeigten Raststellungen am Kameragehäuse 30 befinden und die Raststellungen definieren. Im Bereich der Lageraugen 16, 116 sind Federn 6, 106 angeordnet, die an einem Ende in Gehäuseaufnahmen 23, 123 gehäusefest angebracht sind und an ihren anderen Ende an den Rasthebeln 7, 107 befestigt sind und eine derartige Vorspannung haben, daß sie die Rasthebel 7, 107 in die in Figur 2 gezeigten Raststellungen drücken.

In dem Langloch 10 der Aufnahmeplatte 9, die im wesentlichen parallel zu der durch die Führungsschienen 3, 4 aufgespannten Ebene verläuft, ragt ein Mitnehmer 8, der an seinem unteren Ende von einem Antriebsmechanismus entlang der linearen Richtung bewegt werden kann, wobei der Antrieb in den Figuren nicht gezeigt ist. Der Mitnehmer hat gemäß Figur 2 einen zumindest im wesentlichen kreisförmigen Querschnitt und ist in dem Langloch 10 in der linearen Richtung beweglich, vorteilhafterweise frei beweglich. Sein Spiel wird dabei durch die Erstreckung des Langlochs in der linearen Richtung sowie seinen Durchmesser festgelegt. Eine Bewegung quer zu der linearen Richtung ist grundsätzlich nicht möglich, allenfalls in entsprechenden Toleranzen vorgesehen. Aufgrund einer entsprechenden Formgebung des Langlochs 10 liegt er in entsprechenden runden Enden des Langlochs 10 an.

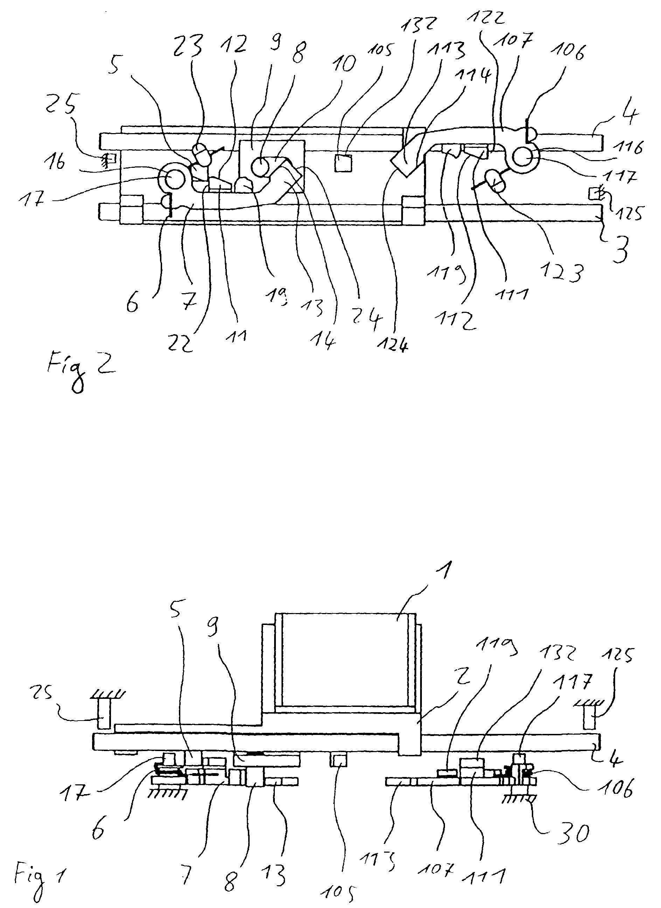

Der Rasthebel 7 ragt gemäß Figur 2 mit seinem Rasthebelende 13 neben den Mitnehmer 8, so daß eine Ausfahrbewegung des Mitnehmers 8 aus der gezeigten Position in Figur 2 nach rechts dazu führt, daß der Mitnehmer 8 gegen eine Auflaufschräge 14 des Rasthebelendes 13 drückt, wodurch der Rasthebel 7 von der Raststellung weggeschwenkt wird. Hierdurch gibt die Nase 11 den Rasthaken 5 frei, so daß der Spiegelträger 2 nunmehr nicht mehr arretiert ist. Bei einer weiteren Auslaufbewegung des Mitnehmers 8 in Figur 2 nach rechts gelangt er anschließend an das andere, rechte Ende des Langlochs 10, wobei dieses Ende gleichzeitig mit der Freigabe des Rasthakens 5 durch die Nase 11 erreicht werden kann. Bei einer weiteren linearen Auslaufbewegung nimmt der Mitnehmer 8 somit die Aufnahmeeinrichtung 9 und hierdurch den gesamten Spiegelträger 2 in Figur 1 und 2 nach rechts mit, wodurch der Spiegel 1 linear verstellt wird.

Beim Einlaufen in die in Figur 1, 2 rechts gezeigte Einrastposition wird zunächst der Rasthebel 107 von der Rastposition, in die er durch die Feder 106 gedrückt wird, in eine entsprechende Lösestellung bewegt. Dies kann zum einen dadurch geschehen, daß der Mitnehmer 8 gegen die Einlaufschräge 124 des Rasthebelendes 113 des Rasthebels 107 drückt, wodurch der Rasthebel 107 wiederum in die Läsestellung, also in Figur 2 nach oben geschwenkt wird. Weiterhin kann diese Wegschwenkbewegung des Rasthebels 107 auch durch den Rasthaken 105 erfolgen, der mit dem Spiegelträger 2 nach rechts bewegt wird und mit seiner Rasthakenschräge 132 gegen die Schräge 112 der Nase 111 drückt, so daß wiederum entsprechend der Rasthebel 107 weggeschwenkt werden kann. Dabei kann die gezeigte Anordnung grundsätzlich so dimensioniert werden, daß die Schwenkbewegung des Rasthebels von der gezeigten Einraststellung in die Lösestellung durch den Mitnehmer 8 oder den Rasthaken 105 (bzw. den Rasthaken 5 bei entsprechender Einfahrbewegung von der rechten Position in die linke Position) oder auch durch beide gleichzeitig erfolgen kann. Nachdem der Rasthaken 105 in eine äußere rechte Position gelangt ist, wird der Rasthebel 107 wiederum von dem Mitnehmer 8 und/oder dem Rasthaken 105 freigegeben und von der Feder 106 in die gezeigte Raststellung gedrückt. Hierbei wird der Rasthaken 105 zwischen der Nase 111 und dem Anschlag 125 aufgenommen. Da der Rasthebel 107 von der Feder 106 entsprechend nach unten gedrückt wird, kann durch die Rastkante 122 und den Anschlag 125 im Kameragehäuse 30 eine Fixierung des Spiegelträgers in dieser rechten Position entsprechend der in Figur 1 gezeigten linken Position erreicht werden, so daß der Spiegel 1 in einer fest definierten Position angeordnet ist.

Beim Loslösen von dieser rechten Raststellung in die in Figur 2 gezeigte linke Endstellung wird entsprechend dem oben genannten Vorgang der Mitnehmer 8 zunächst gegen die Auslaufschräge 114 des Rasthebelendes 113 drücken und den Rasthebel 107 somit nach oben verschwenken, bis der Mitnehmer 8 wiederum an das linke Ende des Langlochs 10 gelangt und die Aufnahmeeinrichtung 9 mitsamt Spiegelträger 2 in Figur 1 und 2 nach links befördert.

Neben einer linearen Bewegung ist weiterhin eine nichtgeradlinige Bewegung des Spiegels möglich. Weiterhin kann ein entsprechender Einrastvorgang auch bei einem gedrehten, geschwenkten oder geklappten Sucherspiegel 1 erfolgen, wobei dann die Rasthaken sowie die Aufnahmeplatte 9 auf entsprechenden Kreisbahnen verlaufen.

### Bezugszeichenliste

- 1: Sucherspiegel
- 2: Spiegelträger
- 3, 4: Führungsschienen
- 5, 105: Rasthaken
- 6, 106: Federn
- 7, 107: Rasthebel
- 8: Mitnehmer
- 9: Aufnahmeplatte
- 10: Langloch
- 11, 111: Nasen
- 12, 112: Schrägen
- 13, 113: Rasthebelenden
- 14, 114: Auslaufschrägen
- 16, 116: Lageraugen
- 17, 117: Lagerzapfen
- 19, 119: Hebelanschläge
- 22, 122: Rastkanten
- 23, 123: Gehäuseaufnahme
- 24, 124: Einlaufschrägen
- 25, 125: Anschlag
- 30: Kameragehäuse
- 32, 132: Rasthakenschräge

## Patentansprüche

1. Spiegelreflexkamera, mit einem einen Sucherspiegel (1) tragenden Spiegelträger (2), der zwischen zwei Endstellungen, einer Sucherstellung und einer Aufnahmestellung, verstellbar ist und Rastmittel (5, 105) zum Einrasten in den Endstellungen sowie eine Aufnahmeeinrichtung (9) zur Aufnahme von Antriebsmitteln aufweist,
und mit verstellbaren Eingriffsmitteln (7, 107), die in einer Eingriffsstellung in die Rastmittel (5, 105) eingreifen und in einer Lösestellung die Rastmittel frei geben und aus der Eingriffsstellung in die Lösestellung durch einen Mitnehmer (8) verstellbar sind, der durch einen Antrieb entlang einer Mitnehmerbahn verstellbar ist und in der Aufnahmeeinrichtung (9) entlang seiner Mitnehmerbahn innerhalb einer Wegstrecke bewegbar ist, die durch zwei Anlagepositionen in der Aufnahmeeinrichtung (9, 10) begrenzt ist,
wobei der Spiegelträger (2) über die Aufnahmeeinrichtung (9) durch den Mitnehmer (8) in diesen Anlagepositionen verstellbar ist.

2. Spiegelreflexkamera nach Anspruch 1, **dadurch gekennzeichnet, daß** die Eingriffsmittel als in die Eingriffsstellung schwenkbare Rasthebel (7, 107) ausgebildet sind.

3. Spiegelreflexkamera nach Anspruch 2, **dadurch gekennzeichnet, daß** die Rasthebel um gehäuseseitig feste Lagerzapfen (17, 117) schwenkbar sind.

4. Spiegelreflexkamera nach einem der Ansprüche 1 bis 3, **dadurch gekennzeichnet, daß** Federn (6, 106) vorgesehen sind, die auf die Eingriffsmittel (7, 107) eine in die Eingriffsstellung wirkende Kraft ausüben.

5. Spiegelreflexkamera nach einem der Ansprüche 1 bis 4, **dadurch gekennzeichnet, daß** die Eingriffsmittel (7, 107) Vorsprünge (11, 111) zum Eingriff in die Rastmittel (5, 105) aufweisen.

6. Spiegelreflexkamera nach Anspruch 5, **dadurch gekennzeichnet, daß** die Vorsprünge (11, 111) Schrägen (12, 112) aufweisen, über die die Eingriffsmittel (7, 107) bei einer Einlaufbewegung des Spiegelträgers (2) in eine Endstellung durch die Rastmittel (5, 105) wegbewegbar sind.

7. Spiegelreflexkamera nach Anspruch 5 oder 6, **dadurch gekennzeichnet, daß** die Vorsprünge (11, 111) Rastkanten (22, 122) zur Anlage an den Rastmitteln (5, 105) in den Endstellungen aufweisen.

8. Spiegelreflexkamera nach einem der Ansprüche 1 bis 7, **dadurch gekennzeichnet, daß** die Einrastmittel (7, 107) Einlaufschrägen (24, 124) aufweisen, über die die Eingriffsmittel (7, 107) bei einer Einlaufbewegung des Spiegelträgers (2) in eine Endstellung durch den Mitnehmer (8) wegbewegbar sind.

9. Spiegelreflexkamera nach einem der Ansprüche 1 bis 8, **dadurch gekennzeichnet, daß** die Rastmittel zwei Rasthaken (5, 105) aufweisen, wobei jeweils ein Eingriffsmittel (7, 107) in einer Endstellung des Spiegelträgers (2) in einen Rasthaken (5, 105) eingreift.

10. Spiegelreflexkamera nach einem der Ansprüche 1 bis 9, **dadurch gekennzeichnet, daß** die Eingriffsmittel (7, 107) Auslaufschrägen (14, 114) aufweisen, und der Mitnehmer bei einer Auslaufbewegung aus einer Endstellung, in der ein Eingriffsmittel eingerastet ist, innerhalb der Wegstrecke in der Aufnahmeeinrichtung (9) gegen die Auslaufschräge (14, 114) eines Eingriffsmittels (7, 107) bewegbar und das Eingriffsmittel durch Entlanggleiten des Mitnehmers (8) an der Einlaufschräge (14, 114) aus der Raststellung in die Lösestellung verstellbar ist.

11. Spiegelreflexkamera nach Anspruch 10, **dadurch gekennzeichnet, daß** die Auslaufschrägen (14, 114) an den Eingriffsmittelenden (13, 113) angeordnet sind.

12. Spiegelreflexkamera nach einem der Ansprüche 1 bis 11, **dadurch gekennzeichnet, daß** die Eingriffsmittel (7, 107) Anschläge (19, 119) zur Festlegung in der Einraststellung aufweisen.

13. Spiegelreflexkamera nach einem der Ansprüche 1 bis 12, **dadurch gekennzeichnet, daß** der Spiegelträger linear zwischen den Endstellungen verschiebbar ist.

14. Spiegelreflexkamera nach Anspruch 13 und Anspruch 9, **dadurch gekennzeichnet, daß** die beiden Rasthaken (5, 105) an dem Spiegelträger (2) in der linearen Richtung zueinander versetzt angeordnet sind.

15. Spiegelreflexkamera nach Anspruch 14, **dadurch gekennzeichnet, daß** die Eingriffsmittel (7, 107) im Kameragehäuse in der linearen Richtung zueinander versetzt angeordnet sind.

16. Spiegelreflexkamera nach einem der Ansprüche 13 bis 15, **dadurch gekennzeichnet, daß** der Spiegelträger (2) auf zwei zueinander parallelen, in der linearen Richtung verlaufenden Führungsschienen (3, 4) gleitend angeordnet ist.

17. Spiegelreflexkamera nach einem der Ansprüche 1 bis 12, **dadurch gekennzeichnet, daß** der Spiegelträger (2) zwischen den Endstellungen verschwenkbar oder klappbar ist.
